# EUROPEAN PATENT SPECIFICATION

(11) **EP 0 470 830 B1**
(45) Date of publication and mention of the grant of the patent: **19.04.1995**
(21) Application number: 91307263.3
(22) Date of filing: 07.08.1991
(51) Int. Cl.: F16L 13/14, F16L 13/02, F16J 15/08, B21D 53/16

(54) **Metallic hollow O-ring and process for producing same**
Metallischer hohler O-Ring und Verfahren zu seiner Herstellung
Anneau torique, métallique et creux et son procédé pour produire la même chose

(30) Priority: 07.08.1990 JP 208779/90
(43) Date of publication of application: 12.02.1992
(73) Proprietor: NIPPON VALQUA INDUSTRIES, LTD., Chiyoda-ku, Tokyo 100 (JP); IIDA PACKING INDUSTRIES CO., LTD., Toyonaka-shi, Osaka-fu 561 (JP)
(72) Inventor: Nakajima, Tatsuji, Toyonaka-shi, Osaka-fu (JP); Nakajima, Toshiharu, Suita-shi, Osaka-fu (JP); Asahina, Minoru, Abeno-ku, Osaka-shi, Osaka-fu (JP)
(74) Representative: Piésold, Alexander J.

(56) References cited:
- EP-A- 0 204 145
- WO-A-89/12770
- DE-B- 2 364 223
- DE-B- 2 528 905
- GB-A- 1 468 370
- US-A- 3 919 761
- US-A- 4 226 449

## Description

This invention relates to welded metallic hollow O-rings for use in wide applications, for example, pipe fittings of ultra-high vacuum apparatus, apparatus for nuclear power stations, or pressure sensors of safety valves incorporated into a high temperature-high pressure part of a fuel injector for a diesel engine. The invention also relates to a process for producing the same.

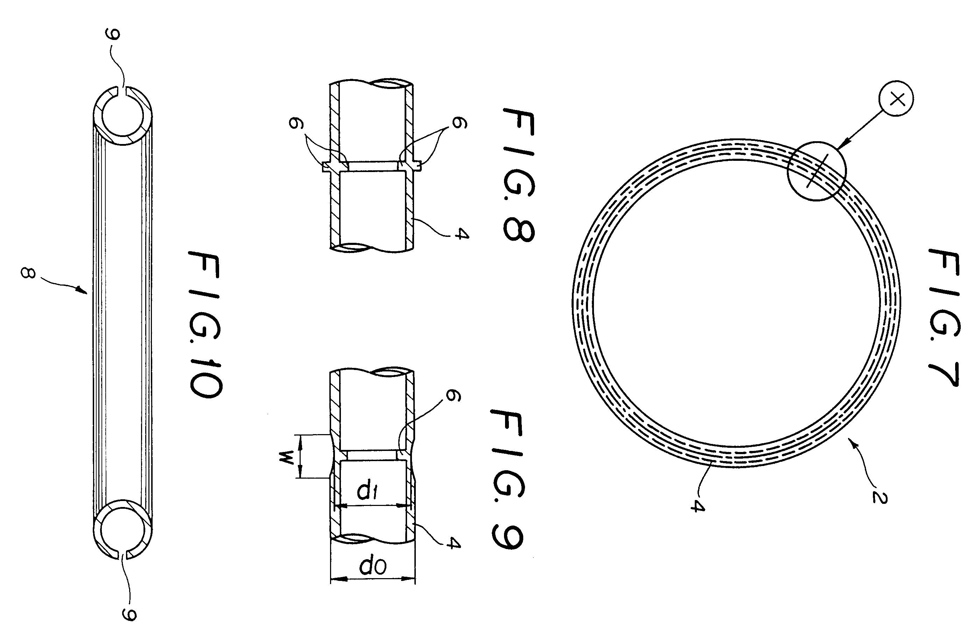

A known welded metallic hollow O-ring is, for example, described in Aerospace Material Specification AMS7325C published by the Society of Automotive Engines Inc. of New York, USA in 1966. Such a metallic hollow O-ring is shown in the accompanying Fig. 7. This metallic hollow O-ring 2 may be produced by bending appropriately a metallic hollow tube 4 into a ring form, and welding both ends of said tube 4 together at a point of X as shown in Fig. 7.

As shown in Fig. 8, however, weld beads are formed at the welded joint, which project respectively inward and outward on the inner and outer peripheries of the metallic hollow tube 4. As shown in Fig. 9, the bead 6 formed on the outer periphery of said tube 4 must be removed therefrom and the surface of said tube 4 from which the bead 6 has been removed must be abraded (polished) to attain a smooth surface. If the conventional O-ring having a weld bead projecting outwardly on its outer periphery of tube is used as it is, there is a possibility that the O-ring will deteriorate in its sealing performance, because the weld bead intervenes between the O-ring and a member, with which said O-ring is to be into contact, thereby forming a space between said O-ring and said member.

In the conventional metallic hollow O-ring 2 illustrated above, however, when the weld bead projecting outwardly is abraded at the welded joint, the outside diameter of the metallic hollow tube 4 after the abrading thereof in the region of W as shown in Fig. 9 becomes d1 relative to the original outside diameter d0 of said tube 4, and from this it follows that the outside diameter of the tube 4 in the region of W is shortened by a difference between d0 and d1. On that account, there was a possibility that the conventional metallic hollow O-ring 2, when used, will deteriorate in sealing performance or mechanical strength according to the degree of accuracy in abrading the weld bead surface or the state of the weld bead 6 projecting inside the metallic hollow tube 4.

When the conventional metallic hollow O-ring 2 is produced by the process as mentioned above, it is necessary to carry out such steps as removing the weld bead 6 formed on the welded joint of the outer periphery of the metallic hollow tube 4, abrading the surface of said tube 4 from which the weld bead 6 has been removed, and conducting dimensional inspection and non-destructive inspection of the abraded portion of said tube 4. Thus there are involved such inconveniences that automation of this process comprising such steps as mentioned above is difficult, the desired O-ring 2 is not fit for mass production, and the production cost of the O-ring 2 is relatively high.

On the other hand, as shown in Fig. 10, unwelded metallic hollow O-rings 8 having a C-shaped cross section and an opening 9 circumferentially formed on the outer peripheral surface of O-ring 8 are also known. Examples are shown in Catalogue No. 35 of Mitsubishi Cable Industries, Ltd entitled "Metal C-Rings" and dated August 1982. Such O-rings are weak in strength in comparison with the welded metallic hollow O-rings and, moreover, a clamping pressure to be applied thereto cannot be increased so high. In addition the surface of a flange, with which the above-mentioned unwelded metallic hollow O-ring is in contact, is required to have good accuracy. Thus the conditions under which said metallic hollow O-ring is used are limited in comparison with the conditions in the case of the welded metallic hollow O-ring.

Moreover, when the conventional C-shaped cross section metallic hollow O-ring mentioned above is used, there is a possibility that open edges of the metallic shell of said O-ring will deviate from each other and, therefore, there is brought about such an inconvenience that sealing properties thereby obtained will be found sometimes to be not uniform. Further, when an internal pressure is applied to the hollow portion of the metallic hollow O-ring of this type, a metallic shell of said O-ring is apt to be distorted along a groove for receiving O-ring, and the surface of the metallic shell is apt to be finely cut when the wall surface of the groove for receiving the O-ring and the metallic shell of said O-ring are rubbed against each other, and due to these circumstances, there is a possibility that no stabilized sealing properties are obtained.

Under such circumstances as mentioned above, there have been developed C-shaped metallic hollow O-ring using spring steel or alloy steel such as Inconel (trade mark) as the metallic shell in order to increase the strength of the conventional C-shaped metallic hollow O-rings. However, when the C-shaped metallic hollow O-ring made of spring steel or alloy steel is used in a pressure sensor of high temperature and pressure or an exhaust system from which an exhaust gas of 600°C or higher is exhausted, it is difficult to maintain a long-term and stable sealing performance of said O-ring, because a creep at high temperature occurs in the shell made of spring steel or alloy steel.

The present invention has been made in view of such circumstances as mentioned above, and an object of the invention is to provide welded metallic hollow O-rings which are easily produced, capable of mass production and excellent in sealing properties as well as in mechanical strength.

Another object of the invention is to provide a process for producing metallic hollow O-rings, by which such welded metallic hollow O-rings as described above can be obtained at low price and good productivity rate.

As illustrated in Figure 10 of the present application there is known a metallic hollow O-ring comprising a metallic shell formed continuously in the circumferential direction into a ring form and having a continuous hollow portion formed in the circumferential direction inside the metallic shell, said metallic shell having only one pair of edge portions extending substantially circumferentially and adjacent to each other.

The present invention is characterised in that said edge portions are welded intermittently or continuously in the circumferential direction
There is also known a process for producing a metallic hollow O-ring comprising a step of bending a piece of metal to form a ring-like metallic shell so that a hollow portion is formed continuously in the circumferential direction inside the metallic shell and, at the same time, an opening defined between the edge portions of said metallic shell is formed continuously in the circumferential direction, said metallic shell having only one pair of edge portions extending substantially circumferentially and adjacent to each other.

The present invention is characterised by the step of welding said portions together intermittently or continuously in the circumferential direction so that said opening is blocked partially or wholly.

According to the metallic hollow O-rings of the present invention and the process of the invention for producing said O-rings, it is thus intended that the desired O-ring is not produced by welding together the end portions of a metallic tube, but is produced by welding the edge portions of a metallic shell together in the circumferential direction. Providing the welded portion of said metallic shell does not come in contact with a member to which the O-ring is applied, there is no need for removal of weld beads formed at the welded joint. Accordingly, it becomes possible to prevent the metallic O-ring from the problems caused by removal of the weld bead such as a decrease in mechanical strength and deterioration in sealing properties by reducing the outside diameter of the O-ring. For the same reasons, it also becomes possible to eliminate the step of removing the weld bead, and to curtail the step of abrading (polishing) the portion of the O-ring from which the weld bead has been removed and the various steps of inspecting the welded joint of said O-ring. As a result, the process for producing metallic hollow O-rings of the present invention is easy to automate; whereby the mass production of the desired O-ring is made possible and also the cost of production is reduced. Further, because precision of the welded joint required in the O-rings of the present invention is not so high, the number of rejected products found is small and in this respect the productivity will also be improved

Because of their welded O-ring structure, the metallic hollow O-rings of the present invention are free from such inconveniences as associated with the conventional unwelded metallic hollow O-rings having a C-shaped cross-section.

The metallic hollow O-rings of the invention preferably have an outside diameter of 6 to 100 mm, more preferably 12 to 25 mm.

Furthermore, a preferred process for producing a metallic hollow O-ring is characterized by cutting a cylindrical metallic tube to an appropriate length, and folding back (preferably outwardly) the edges of the cut tube so that a continuous hollow portion is formed in the circumferential direction inside the fold. Thus, the metallic hollow O-ring is produced by pressing a small diameter tube in such a manner, whereby dimensional stability and mass production can be assured.

Certain preferred embodiments of the invetion will now be described by way of example and with reference to the accompanying drawings, in which:
Fig. 1 is a partially exploded cross sectional view of the metallic hollow O-ring of one embodiment of the present invention.
Fig. 2 shows a process for producing the metallic hollow O-ring of the embodiment of the present invention in cross section wherein A to E show respectively the steps involved in the process.
Fig. 3 shows a process for producing the metallic hollow O-ring of the embodiment of the present invention in cross section wherein A to C show respectively the steps involved in the process.
Fig. 4 shows a process for producing the metallic hollow O-ring of the embodiment of the present invention in cross section wherein A and B show respectively the steps involved in the process.
Fig. 5 is a partially exploded front view of the metallic hollow O-ring of a further embodiment of the invention.
Fig. 6 is a partially exploded cross sectional view of the metallic hollow O-ring of another embodiment of the invention.
Fig. 7 is a plan view of a conventional metallic hollow O-ring.
Fig. 8 is a cross-sectional view of an essential part of the O-ring showing particulars of the X portion indicated in Fig. 7 before abrasion.
Fig. 9 is a cross-sectional view of an essential part of the O-ring showing particulars of the X portion indicated in Fig. 7 after abrasion.
Fig. 10 is a sectional view of the prior O-ring having a C-shaped cross section.

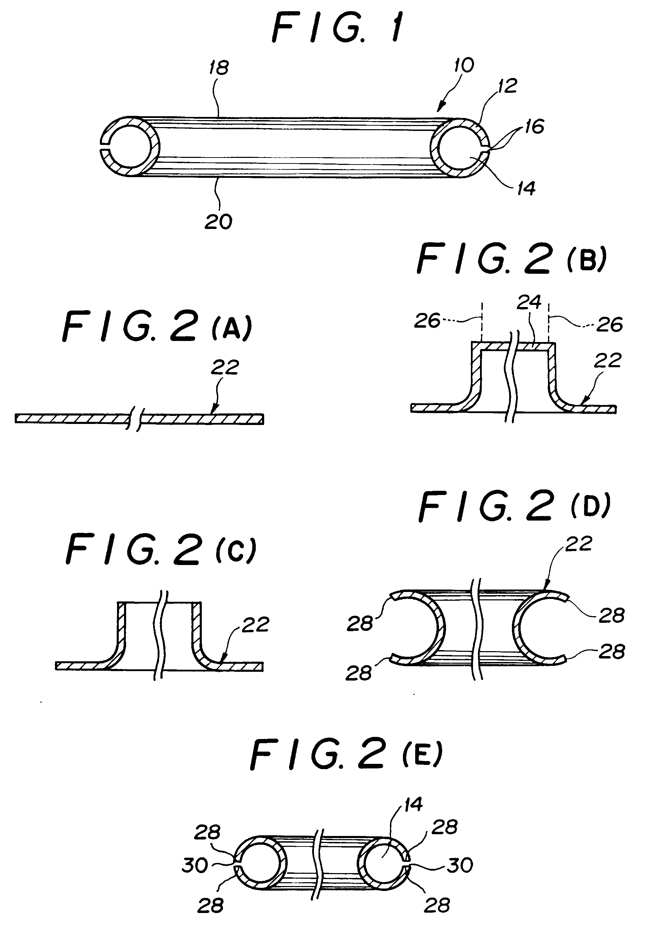

The metallic hollow O-ring 10 of the invention shown in Fig. 1 is composed of a metallic shell 12 which continues in the circumferential direction so as to have a ring-like form, and forms therein continuously a hollow portion 14 of a circular cross section in the circumferential direction. The metallic hollow O-ring 10 has an outside diameter of 6 to 100 mm, preferably 12 to 25 mm.

This metallic shell 12 is designed to have on its outer peripheral portion a pair of butt edges which are formed continuously in the circumferential direction so as to be opposite to each other and are to be butt welded in the manner as will be mentioned later. Because the sealing surface (the surface of the metallic hollow O-ring 10 at which said O-ring will come in contact with a member to which the O-ring is applied) of the metallic hollow O-ring 10 includes the upper surface 18 and lower surface 20, even when the welded joint is present on the outer peripheral portion of the O-ring 10, the weld bead formed on said welded joint will not exert adverse effect on the sealing performance of said O-ring 10. It is not necessary to carry out butt welding all over the butt edge portions 16, and this may be carried out intermittently. In this case, the hollow portion 14 is not tight sealed, but it becomes possible to adjust the balance between inside and outside the metallic shell 12 by introducing a pressure fluid into the hollow portion 14. When the hollow portion 14 is tight sealed, it may be designed that a pressure fluid is encapsulated into said hollow portion 14.

Materials used for making the metallic shell 12 are not particularly limited to specific ones, and may be all metals for structural purposes, including alloys thereof. The metallic shell 12 may be made of not only a single-layer metal plate but also a laminated metal plate. In particular, it becomes possible in the present invention to use as a material for the metallic shell 12 a spring steel which could not be used in the conventional welded metallic hollow O-rings because the welded joint decreases in strength by heat deterioration. The reason therefor is that in the metallic hollow O-rings of the present invention, the welded joint 16 will not be included in the sealing surface of said O-rings. When the metallic shell 12 is formed from the spring steel, the resulting metallic hollow O-ring further increases in elasticity. Further, the surface of this metallic shell may be subjected to surface treatment such as plating in order to improve the suitability of the resulting metallic hollow O-ring for a member of which said O-ring is applied.

Such metallic hollow O-ring 10 as mentioned above may be produced by the process as will be illustrated hereinafter.

For instance, a disk material 22 for the metallic shell as shown in Fig. 2(A) is used, and the disk material 22 is first pressed by means of a mold or the like in the manner as shown in Fig. 2(B) so that a disk-like bottom portion 24 is formed. Then, the material 22 is cut along a cut-through line 26 to obtain a ring having an L-shaped cross-section as shown in Fig. 2(C). This ring is bent by means of a mold or the like in the manner as shown in Fig. 2(D) and (E) so that the ring comes to have a circular cross-section, whereby the edge portions 28 of the material 22 approach at the outer peripheral portion of the ring, and an opening 30 is formed between the edge portions 28. Thereafter, the edge portions 28 are butt welded so as to block the opening 30 formed continuously in the circumferential direction, whereby the metallic hollow O-ring 10 as shown in Fig. 1 is obtained.

The means for welding the above-mentioned edge portions 28 is not particularly limited to specific ones, and useful means include TIG welding, laser welding, seam welding, spot welding, etc., the welding operation of which is desirably automated.

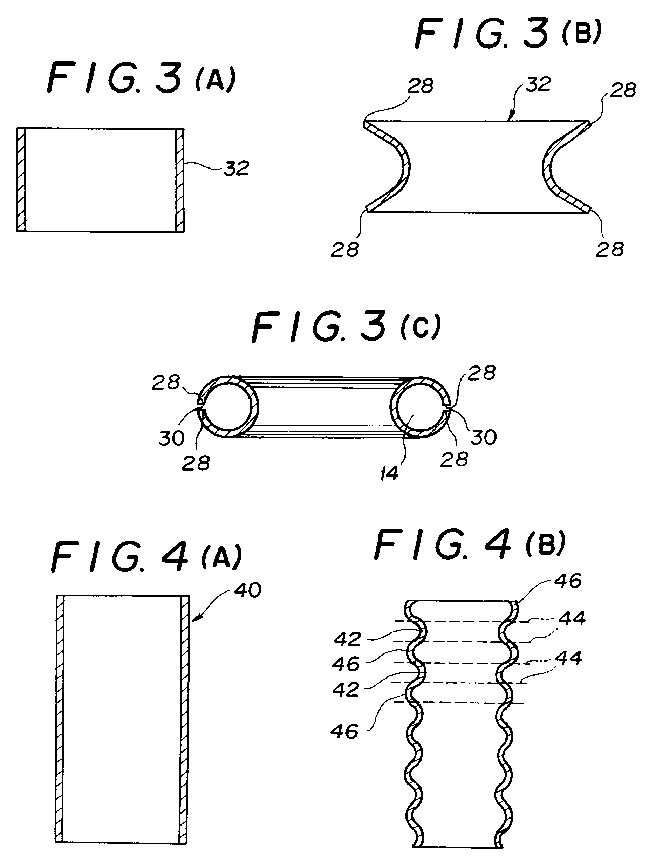

In the embodiment of the process of the invention as shown in Fig. 3, a small diameter cylindrical metallic tube shown in Fig. 3(A) is used as a material 32 for the metallic shell, the material 32 is cut off in an appropriate length, and the ends of the cut tube (the edge portions 28) are folded outwardly in the manner as shown in Fig. 3(B). And then, by means of a plurality of bending operations, a ring having a hollow portion 14 of a circular cross-section as shown in Fig. 3(C) is finally obtained.

Thereafter, the edge portions 28 are butt welded so that an opening 30 of the hollow portion 14 formed continuously in the circumferential direction is blocked, whereby such a metallic hollow O-ring 10 as shown in Fig. 1 is obtained. Thus, the metallic hollow O-ring is produced by pressing a small diameter tube in the manner described, hence dimensional stability and mass production can be assured thereby.

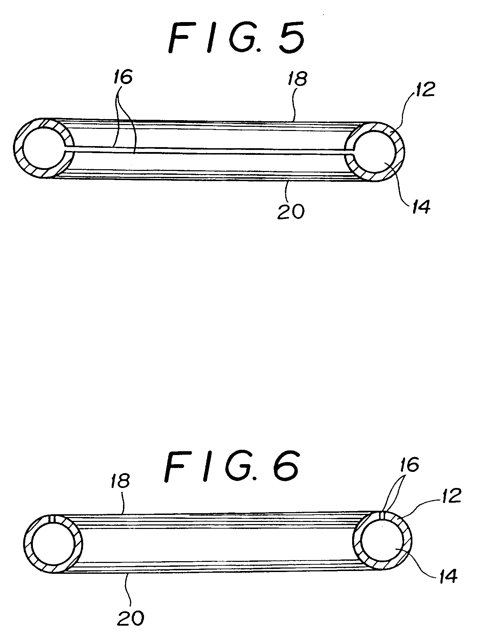

In the embodiment of the process of the invention as shown in Fig. 4, a relatively long metallic tube 40 is used. The metallic tube 40 is formed by means of the liquid pressure molding or the like into a bellows-like form, and each wavy portion thus formed is cut off from the tube in the axial direction along cut-through lines 44 to obtain materials 42 and 46 for the metallic shell. The material 42 for the metallic shell is concavo-convex, and can be formed by the bending steps as shown in Fig. 3(B) and (c) into such a metallic hollow O-ring as shown in Fig. 1. On the other hand, the material 46 is convexo-concave, and can be formed into such a metallic hollow O-ring as shown in Fig. 6 by the bending step as mentioned above but reversing the bending direction and carrying out the welding at the inside diameter side.

The present invention is in no way limited to these embodiments as illustrated above, and may be modified in varying way within the scope of the invention. For example, as shown in Fig. 5, welded joint 16 may be formed at the inner peripheral portion of the O-ring. Further, when the sealing surface of the O-ring is the outer peripheral or inner peripheral portion of said O-ring, as shown in Fig. 6, the welded joint 16 may be formed on the upper surface 18 or lower surface 20 of said O-ring. Furthermore, the metallic hollow O-rings of the invention may be shaped into not only a circular form but also into varied forms such as an elliptical form, square form and the like.

As illustrated hereinbefore, according to the metallic hollow O-rings and the process for preparing the same, it is intended that said O-rings are not produced by welding both ends of a metallic tube together, but are produced by welding the metallic tube in the circumferential direction at a portion of said tube where the resulting O-ring does not come in contact with a member to which said O-ring is applied, hence there is no need of removing a weld bead formed at the welded joint of the O-ring. Accordingly, it becomes possible to prevent the metallic hollow O-ring from decreasing in mechanical strength caused by the removal of the weld bead or deteriorating in sealing properties by reduction in diameter of said O-ring. Further, for the same reasons as mentioned above, it becomes also possible to eliminate the step of removing the weld bead, and to curtail the step of abrading (polishing) the portion of the O-ring from which the weld bead has been removed and the various steps of inspecting the welded joint of said O-ring. As a result, the process for producing the metallic hollow O-rings of the present invention is easy to automate, whereby the mass production of the desired O-ring is made possible and also the cost of production is reduced. Further, because precision of the welded joint required in the O-rings of the present invention is not so high, the number of rejected products found is small and in this respect the productivity will also be improved. In particular, it is possible to use as a material for the metallic shell a spring steel which could not be used in the conventional welded metallic hollow O-rings because the welded joint decreases in strength by heat deterioration. The reason therefor is that in the preferred metallic hollow O-rings of the present invention, the welded joint will not be included in the sealing surface of said O-rings.

Because of their welded O-ring structure, the metallic hollow O-rings of the present invention are free from such inconveniences as associated with the conventional unwelded metallic hollow O-rings having a C-shaped cross-section.

### Example and Comparative Example

(All dimensions in millimetres)

### Metallic C-ring of the comparative example

- Dimension:: OD ⌀ 16 x tube diameter ⌀ 1.8 x tube wall thickness t 0.4 (open at the outside diameter side)
- Surface coat:: Silver coating (about 30 »m)
- Dimension of a groove applied with the O-ring:: depth E 1.47 x outer diameter 16.13 x width 1.83
- Material:: SUS 304

### Metallic hollow O-ring (picoring) of the example of the present invention.

- Dimension:: OD ⌀ 16 x tube diameter ⌀ 1.6 x tube wall thickness t 0.25 (open at the outside diameter side)
- Surface coat:: Silver coating (about 30 »m)
- Dimension of a groove applied with the O-ring:: depth E 1.25 x outer diameter A 16.20 x width G 2.00
- Material:: SUS 304

### Clamping Force

Both metallic hollow O-rings were respectively clamped in the grooves.
- Metallic C-ring:: 147 N/mm (150 Kgf/cm)
- Metallic O-ring:: 177 N/mm (180 Kgf/cm)

### Heating Condition

200°C x 100 H

### Gas Tight Test

The gas tight test was carried out using a helium leak detector initially at room temperature and then at a high temperature by application of heat at 200°C for 100 hours. Results of the gas tight test conducted were as shown in the following table.

| Amount of helium leaked | | |
|---|---|---|
| | Metallic C-ring | Metallic hollow O-ring |
| Initial stage | 1 x 10⁻¹⁰ Pa m³/sec | Not more than the sensitivity |
| 200°C x 100 hr | 1 x 10⁻⁷ Pa m³/sec | 2 x 10⁻¹⁰ Pa m³/sec |
| Detection sensitivity: 1.4 x 10⁻¹² Pa m³/sec | | |

It is demonstrated by the results obtained above that the metallic hollow O-ring of the present invention is less in leakage of helium gas and excellent in gas tight properties in comparison with the metallic C-ring of the comparative example.

## Claims

1. A metallic hollow O-ring (10) comprising a metallic shell (12) formed continuously in the circumferential direction into a ring form and having a continuous hollow portion (14) formed in the circumferential direction inside the metallic shell (12), said metallic shell having only one pair of edge portions (16) extending substantially circumferentially and adjacent to each other, charaterised in that said edge portions (16) are welded intermittently or continuously in the circumferential direction.

2. A metallic hollow O-ring (10) as claimed in claim 1 wherein the outside diameter of said O-ring (10) is not more than 100 mm.

3. A process for producing a metallic hollow O-ring (10) comprising a step of bending a piece of metal to form a ring-like metallic shell (12) so that a hollow portion (14) is formed continuously in the circumferential direction inside the metallic shell and, at the same time, an opening defined between the edge portions (16) of said metallic shell is formed continuously in the circumferential direction, said metallic shell having only one pair of edge portions (16) extending substantially circumferentially and adjacent to each other, characterised by the step of welding said edge portions (16) together intermittently or continuously in the circumferential direction so that said opening is blocked partially or wholly.

4. A process for producing a metallic hollow O-ring (10) as claimed in claim 3 wherein the outside diameter of said O-ring (10) is not more than 100 mm.

5. A process for producing a metallic hollow O-ring (10) as claimed in claim 3 or 4 wherein the initial material comprises a cylindrical metallic tube (32) cut off to an appropriate length, and wherein the edge portions (28) of the cut metallic tube are folded outwardly so that a hollow portion is formed inside the cut metallic tube continuously in the circumferential direction.

6. A process for producing a metallic hollow O-ring (10) as claimed in claim 3 or 4, wherein the initial material is a flat round plate (22) and said ring-like metallic shell is formed by pressing upwards an inner circular section of the plate (24), cutting the resulting uppermost circular part to obtain a ring having an L-shaped cross-section, and bending the inner top and outer bottom edges (28) towards one another so that a hollow portion (14) is formed therein continuously in the circumferential direction.

## Patentansprüche

1. Hohler Metall-O-Ring (10), der einen in der Umfangsrichtung durchgehend in eine Ringgestalt geformten Metallmantel (12) umfaßt und einen innerhalb des Metallmantels (12) in der Umfangsrichtung gebildeten durchgehenden hohlen Abschnitt (14) aufweist, wobei der Metallmantel nur zwei sich im wesentlichen in Umfangsrichtung erstreckende und einander benachbarte Randabschnitte (16) aufweist,
**dadurch gekennzeichnet,** daß die Randabschnitte (16) unterbrochen oder durchgehend in der Umfangsrichtung geschweißt sind.

2. Hohler Metall-O-Ring (10) nach Anspruch 1, wobei der Außendurchmesser des O-Rings (10) 100 mm nicht übersteigt.

3. Verfahren zum Erzeugen eines hohlen Metall-O-Rings (10), umfassend einen Schritt des Biegens eines Metallstücks zum Bilden eines ringähnlichen Metallmantels (12) derart, daß ein hohler Abschnitt (14) innerhalb des Metallmantels in der Umfangsrichtung durchgehend gebildet wird und daß gleichzeitig eine zwischen den Randabschnitten (16) des Metallmantels abgegrenzte Öffnung in der Umfangsrichtung durchgehend gebildet wird, wobei der Metallmantel nur zwei sich im wesentlichen in Umfangsrichtung erstreckende und einander benachbarte Randabschnitte (16) aufweist,
**gekennzeichnet durch** den Schritt des Zusammenschweißens der Randabschnitte (16) unterbrochen oder durchgehend in der Umfangsrichtung derart, daß die Öffnung teilweise oder vollständig blockiert wird.

4. Verfahren zum Erzeugen eines hohlen Metall-O-Rings (10) nach Anspruch 3, wobei der Außendurchmessers des O-Rings (10) 100 mm nicht übersteigt.

5. Verfahren zum Erzeugen eines hohlen Metall-O-Rings (10) nach Anspruch 3 oder 4, wobei das Ausgangsmaterial ein auf eine angemessene Länge gekürztes zylindrisches Metallrohr (32) umfaßt, und wobei die Randabschnitte (28) des gekürzten Metallrohrs derart nach außen gefaltet werden, daß innerhalb des gekürzten Metallrohrs ein hohler Abschnitt in der Umfangsrichtung durchgehend gebildet wird.

6. Verfahren zum Erzeugen eines hohlen Metall-O-Rings (10) nach Anspruch 3 oder 4, wobei das Ausgangsmaterial eine flache runde Platte (22) ist und der ringähnliche Metallmantel gebildet wird durch Drücken eines inneren kreisförmigen Plattenabschnitts (24) nach oben, Abschneiden des sich ergebenden obersten ringförmigen Teils zum Erhalten eines Rings mit einem L-förmigen Querschnitt, und Biegen des inneren oberen und des äußeren unteren Rands (28) derart zueinander, daß darin ein hohler Abschnitt (14) in der Umfangsrichtung durchgehend gebildet wird.

## Revendications

1. Joint torique métallique creux (10) comprenant une enveloppe métallique (12) formée de façon continue en direction circonférentielle avec la forme d'un anneau et ayant une partie creuse continue (14) formée en direction circonférentielle à l'intérieur de l'enveloppe métallique (12), l'enveloppe métallique n'ayant que deux parties de bord (16) disposées en direction pratiquement circonférentielle et adjacentes l'une à l'autre, caractérisé en ce que les parties de bord (16) sont soudées de façon intermittente ou continue dans la direction circonférentielle.

2. Joint torique métallique creux (10) selon la revendication 1, dans lequel le diamètre externe du joint torique (10) ne dépasse pas 100 mm.

3. Procédé de fabrication d'un joint torique métallique creux (10), comprenant une étape de pliage d'une pièce métallique pour la formation d'une enveloppe métallique (12) en forme d'anneau de manière qu'une partie creuse (14) soit réalisée de façon continue en direction circonférentielle à l'intérieur de l'enveloppe métallique et simultanément une ouverture délimitée entre les parties de bord (16) de l'enveloppe métallique est formée de façon continue en direction circonférentielle, l'enveloppe métallique ayant une seule paire de parties de bord (16) disposées en direction pratiquement circonférentielle et adjacentes mutuellement, caractérisé par l'étape de soudage des parties de bord (16) l'une à l'autre par intermittence ou de façon continue dans la direction circonférentielle afin que l'ouverture soit bouchée partiellement ou totalement.

4. Procédé de fabrication d'un joint torique métallique creux (10) selon la revendication 3, dans lequel le diamètre externe du joint torique (10) ne dépasse pas 100 mm.

5. Procédé de fabrication d'un joint torique métallique creux (10) selon la revendication 3 ou 4, dans lequel le matériau initial est sous forme d'un tube métallique cylindrique (32) découpé à une longueur convenable, et dans lequel les parties de bord (28) du tube métallique coupé sont pliées vers l'extérieur afin qu'une partie creuse soit formée dans le tube métallique coupé de façon continue dans la direction circonférentielle.

6. Procédé de fabrication d'un joint torique métallique creux (10) selon la revendication 3 ou 4, dans lequel le matériau initial est une plaque circulaire plate (22), et l'enveloppe métallique en forme d'anneau est réalisée par emboutissage vers le haut d'un tronçon circulaire interne de la plaque (24), par découpe de la partie circulaire supérieure résultante pour la formation d'un anneau ayant une section transversale en L, et par pliage des bords supérieurs internes et inférieurs externes (28) l'un vers l'autre afin qu'une partie creuse (14) soit formée à l'intérieur de façon continue dans la direction circonférentielle.
